(19) **Europäisches Patentamt**

**European Patent Office**

**Office européen des brevets**

(11) **EP 1 285 306 B1**

(12) **FASCICULE DE BREVET EUROPEEN**

(45) Date de publication et mention
de la délivrance du brevet:
**26.07.2006 Bulletin 2006/30**

(21) Numéro de dépôt: **01936540.2**

(22) Date de dépôt: **16.05.2001**

(51) Int Cl.:
***G02C 7/02*** (2006.01)

(86) Numéro de dépôt international:
**PCT/FR2001/001492**

(87) Numéro de publication internationale:
**WO 2001/088601 (22.11.2001 Gazette 2001/47)**

(54) **LENTILLE OPHTALMIQUE MULTIFOCALE PROGRESSIVE A VARIATION DE PUISSANCE RAPIDE**

MULTIFOKALE PROGRESSIVE OPHTHALMISCHE LINSE MIT SCHNELL VARIIERENDER BRECHKRAFT

PROGRESSIVE MULTIFOCAL OPHTHALMIC LENS WITH FAST POWER VARIATION

(84) Etats contractants désignés:
**AT BE CH CY DE DK ES FI FR GB GR IE IT LI LU MC NL PT SE TR**

(30) Priorité: **16.05.2000 FR 0006214**

(43) Date de publication de la demande:
**26.02.2003 Bulletin 2003/09**

(73) Titulaire: **ESSILOR INTERNATIONAL COMPAGNIE GENERALE D'OPTIQUE
94227 Charenton cédex (FR)**

(72) Inventeurs:
• **AHSBAHS, Françoise
F-94100 Saint Maur des Fosses (FR)**
• **LE SAUX, Gilles
F-75010 Paris (FR)**

(74) Mandataire: **Hirsch & Associés
58, avenue Marceau
75008 Paris (FR)**

(56) Documents cités:
**FR-A- 2 726 374        US-A- 4 854 689
US-A- 5 270 745        US-A- 5 488 442**

**Description**

La présente invention concerne les lentilles ophtalmiques multifocales. De telles lentilles sont bien connues; elles fournissent une puissance optique variant continûment en fonction de la position sur la lentille; typiquement, lorsqu'une lentille multifocale est montée dans une monture, la puissance dans le bas de la lentille est supérieure à la puissance dans la haut de la lentille.

Dans la pratique, les lentilles multifocales comprennent souvent une face asphérique, et une face qui est sphérique ou torique, usinée pour adapter la lentille à la prescription du porteur. Il est donc habituel de caractériser une lentille multifocale par les paramètres surfaciques de sa surface asphérique, à savoir en tout point une sphère moyenne S et un cylindre.

La sphère moyenne S est définie par la formule suivante :

$$S = \frac{n-1}{2}\left(\frac{1}{R_1} + \frac{1}{R_2}\right)$$

avec $R_1$ et $R_2$ les rayons de courbure minimum et maximum, exprimés en mètres, et n l'indice de réfraction du matériau de la lentille.

Le cylindre est donné, avec les mêmes conventions, par la formule :

$$C = (n-1)\left|\frac{1}{R_1} - \frac{1}{R_2}\right|$$

De telles lentilles multifocales sont bien connues; on peut parmi ces lentilles multifocales distinguer des lentilles appelées lentilles progressives, adaptées à la vision à toutes les distances, des lentilles plus spécifiquement dédiées à la vision de près et à la vision intermédiaire, et des lentilles dédiées à la vision de loin et à la vision intermédiaire. De façon générale, l'invention est applicable à toute lentille présentant une variation de puissance.

Les lentilles ophtalmiques progressives comprennent habituellement une zone de vision de loin, une zone de vision de près, une zone de vision intermédiaire et une méridienne principale de progression traversant ces trois zones. Le document FR-A-2 699 294, auquel on pourra se référer pour plus de détails, décrit dans son préambule les différents éléments d'une lentille ophtalmique multifocale progressive, ainsi que les travaux menés par la demanderesse pour améliorer le confort des porteurs de telles lentilles. En résumé, on appelle zone de vision de loin la partie supérieure de la lentille, qui est utilisée par le porteur pour regarder loin. On appelle zone de vision de près la partie inférieure de la lentille, qui est utilisée par le porteur pour regarder près, par exemple pour lire. La zone s'étendant entre ces deux zones est appelée zone de vision intermédiaire.

On appelle alors addition la différence de sphère moyenne entre un point de référence de la zone de vision de près, et un point de référence de la zone de vision de loin. Ces deux points de référence sont habituellement choisis sur la méridienne principale de progression définie plus bas.

Pour toutes les lentilles multifocales, la puissance dans les différentes zones de vision de loin, intermédiaire et de près, indépendamment de leur position sur le verre, est fixée par la prescription. Celle-ci peut comprendre uniquement une valeur de puissance en vision de près, ou une valeur de puissance en vision de loin et une addition, et éventuellement une valeur d'astigmatisme avec son axe et de prisme.

Les lentilles dédiées plus spécifiquement à la vision de près ne présentent pas réellement de zone de vision de loin comme les lentilles progressives classiques, mais une zone de vision de près, et une zone de puissance inférieure au-dessus de cette zone de vision de près; la zone de vision de près assure au porteur une vision nette et confortable en vision de près, c'est-à-dire dans un plan situé environ à 30 cm; la décroissance de puissance au-delà de cette distance, dans la partie supérieure de la lentille, permet au porteur de voir net au-delà. Ces lentilles sont prescrites en fonction de la puissance nécessaire au porteur en vision de près, indépendamment de la puissance en vision de loin.

Une telle lentille est décrite dans une article de l'Opticien Lunetier d'avril 1988, et est commercialisée par la demanderesse sous la marque Essilor Delta; cette lentille est simple à utiliser et aussi facile à supporter qu'une lentille progressive, et est attirante pour la population des presbytes non équipée de lentilles progressives. Cette lentille est aussi décrite dans la demande de brevet FR-A-2 588 973. Elle présente une partie centrale qui équivaut au verre unifocal que l'on utiliserait normalement pour corriger la presbytie, de sorte à assurer une vision de près satisfaisante; cette partie centrale correspond sensiblement à une zone de vision de près d'une lentille multifocale progressive. Elle présente en outre une légère décroissance de puissance dans la partie supérieure, qui assure au porteur une vision nette aussi au-delà du champ habituel de vision de près.

Pour les lentilles progressives, on appelle méridienne principale de progression une ligne qui est représentative de l'intersection de la surface asphérique d'une lentille et du regard d'un porteur moyen lorsqu'il regarde devant lui des objets dans un plan méridien, à différentes distances. La méridienne principale de progression est souvent sur la surface multifocale une ligne ombilique, i. e. dont tous les points présentent un cylindre nul. Cette ligne est utilisée dans la définition d'une surface progressive, comme paramètre d'optimisation. Elle est représentative de la stratégie d'utilisation de la lentille par le porteur moyen. De nombreux choix de la méridienne ont été proposés; le plus simple et le plus ancien consiste à ménager sur la lentille une ligne ombilique verticale, et à incliner chaque lentille au montage dans une monture, pour prendre en compte la convergence du regard lors du passage de la vision de près à la vision de loin.

Sur la face asphérique d'une lentille multifocale, cette définition de la méridienne de consigne correspond sensiblement à une ligne qui est formée des milieux des segments horizontaux reliant les lignes d'isocylindre de demi-addition. Dans ce contexte, on appelle ligne d'isocylindre pour une valeur donnée du cylindre l'ensemble des points présentant cette valeur du cylindre.

Est couramment matérialisé sur les lentilles ophtalmiques, progressives ou non, un point appelé croix de montage, qui est utilisé par l'opticien pour le montage des lentilles dans une monture. L'opticien à partir des caractéristiques anthropométriques du porteur - écart pupillaire et hauteur par rapport à la monture - procède à l'usinage de la lentille par débordage, en utilisant comme repère la croix de montage. Dans les lentilles commercialisées par la demanderesse, la croix de montage est située 4 mm au-dessus du centre géométrique de la lentille; celui-ci est généralement situé au milieu des micro-gravures. Elle correspond pour une lentille correctement positionnée dans une monture à une direction horizontale du regard, pour un porteur ayant la tête droite.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance, voir les demandes de brevet FR-A-2 683 642 et FR-A-2 683 643. FR-A-2 753 805, propose un tracé de la méridienne par tracé de rayons, permet de déterminer la méridienne, en tenant compte du rapprochement du plan de lecture ainsi que des effets prismatiques.

Un des problèmes qui se pose est celui du montage des lentilles multifocales dans les montures de petite taille; il arrive, lors du montage de telles lentilles dans des montures de petite taille, que la partie inférieure de la zone de vision de près soit supprimée lors de l'usinage du verre. Le porteur dispose alors d'une vision correcte en vision de loin et en vision intermédiaire, mais d'une zone de vision de près de taille trop réduite. Il a tendance à utiliser pour la vision de près la partie inférieure de la zone de vision intermédiaire. Ce problème nouveau est particulièrement aigu du fait de la tendance de la mode à des montures de petite taille.

Un autre problème que rencontrent les porteurs de lentilles multifocales progressive est la fatigue en cas de travail prolongé en vision de près ou en vision intermédiaire. La zone de vision de près d'une lentille progressive se trouve en effet dans le bas de la lentille, et l'utilisation prolongée de la zone de vision de près peut provoquer chez certains porteurs une fatigue.

Un dernier problème est l'adaptation des porteurs aux lentilles. Il est connu que les porteurs ont couramment besoin d'une période d'adaptation à des lentilles progressives, avant d'utiliser de façon appropriée les différentes zones du verre pour les activités correspondantes. Le problème d'adaptation se rencontre notamment pour les anciens porteurs de lentilles bifocales; ces lentilles présentent une pastille de vision de près, dont la partie supérieure est généralement située à 5 mm sous le centre géométrique de la lentille. Or, dans les verres progressifs classiques, la zone de vision de près est généralement située plus bas; même s'il est difficile de fixer exactement la limite entre la zone de vision intermédiaire et la zone de vision de près, un porteur subirait une fatigue moins importante en utilisant des lentilles progressives en vision de près à 5 mm en dessous de la croix de montage.

L'invention propose une solution à ces problèmes. Elle fournit une lentille susceptible d'être montée dans des montures de petite taille, sans que la zone de vision de près ne soit réduite. Elle améliore aussi le confort des porteurs utilisant de façon prolongée la zone de vision de près ou la zone de vision intermédiaire. Elle rend aussi plus facile l'adaptation aux lentilles progressives d'anciens porteurs de lentilles bifocales. Plus généralement, l'invention est applicable à toute lentille présentant une variation de puissance rapide; elle propose un compromis particulièrement avantageux entre la variation de puissance et la valeur maximale du cylindre.

Plus précisément, l'invention propose une lentille ophtalmique multifocale progressive, comportant une surface asphérique progressive avec en tout point une sphère moyenne et un cylindre, caractérisée par la relation :

$$L < 1/(-0,031*R^2 + 0,139*R + 0,014)$$

où L est égal au rapport (Smax- Smin)/gradSmax entre la différence des valeurs maximale et minimale de la sphère moyenne dans une zone d'un cercle de diamètre de 40 mm centré sur le centre géométrique de la lentille, cette zone étant limitée par des droites verticales à 1 mm de ce centre côté temporal et à 4 mm de ce centre côté nasal d'une part et la valeur maximale du gradient de la sphère moyenne dans cette même zone d'autre part, et

où R est égal au rapport Cmax/(Smax - Smin) entre la valeur maximale du cylindre à l'intérieur du dit cercle et la différence des valeurs maximale et minimale de la sphère moyenne dans ladite zone.

Dans un mode de réalisation, la lentille présente une zone de vision de près.

Elle peut aussi présenter une zone de vision de loin.

Dans un mode de réalisation, l'angle entre deux demi-droites issues du centre géométrique de la lentille et passant respectivement par les points d'un cercle de rayon 20 mm centré sur le centre géométrique qui présentent un cylindre égal à la moitié de la différence (Smax - Smin) des valeurs maximale et minimale de la sphère moyenne dans ladite zone et qui sont situés dans la moitié supérieure de la lentille est compris entre 130° et 155°.

Il est encore avantageux que l'angle entre deux demi-droites issues du centre géométrique de la lentille et passant respectivement par les points d'un cercle de rayon 20 mm centré sur le centre géométrique qui présentent un cylindre égal à la moitié de la différence (Smax - Smin) des valeurs maximale et minimale de la sphère moyenne dans ladite zone et qui sont situés dans la moitié inférieure de la lentille soit compris entre 40° et 55°.

Dans un mode de réalisation, en un point situé sur un demi-cercle de rayon 20 mm centré sur le centre géométrique dans la partie supérieure de la lentille, et qui présente un cylindre égal à la moitié de la différence (Smax - Smin) des valeurs maximale et minimale de la sphère moyenne dans ladite zone, le rapport entre le gradient de cylindre et la dite différence est compris entre 0,03 et 0,11 mm$^{-1}$.

Dans un autre mode de réalisation, en un point situé sur un demi-cercle de rayon 20 mm centré sur le centre géométrique dans la partie inférieure de la lentille, et qui présente un cylindre égal à la moitié de la différence (Smax - Smin) des valeurs maximale et minimale de la sphère moyenne dans ladite zone, le rapport entre le gradient de cylindre et la dite différence est compris entre 0,05 et 0,14 mm$^{-1}$.

Il est aussi possible que le rapport entre

- le maximum du gradient de cylindre sur les deux points situés sur un demi-cercle de rayon 20 mm centré sur le centre géométrique dans la partie inférieure de la lentille, et qui présentent un cylindre égal à la moitié de la différence (Smax - Smin) des valeurs maximale et minimale de la sphère moyenne dans ladite zone d'une part et
- le minimum du gradient de cylindre sur les deux points situés sur un demi-cercle de rayon 20 mm centré sur le centre géométrique dans la partie supérieure de la lentille, et qui présentent un cylindre égal à la moitié de la différence (Smax - Smin) des valeurs maximale et minimale de la sphère moyenne dans ladite zone, d'autre part

soit inférieur à 2.

De préférence, pour un point situé sur un cercle de rayon 20 mm centré sur le centre géométrique, et dont la sphère moyenne est supérieure à la sphère moyenne minimale Smin d'une quantité égale à la moitié de la différence (Smax - Smin) des valeurs maximale et minimale de la sphère moyenne dans ladite zone, le rapport entre le gradient de sphère et la dite différence est compris entre 0,015 et 0,07 mm$^{-1}$.

Dans encore un mode de réalisation, l'angle sous lequel sont vus depuis le centre géométrique de la lentille deux points situés sur un demi-cercle de rayon 20 mm centré sur ledit centre dans la partie supérieure de la lentille et qui présentent un cylindre égal à la moitié de la différence (Smax - Smin) des valeurs maximale et minimale de la sphère moyenne dans ladite zone est au moins égal à deux fois l'angle sous lequel sont vus depuis le centre géométrique de la lentille deux points situés sur un demi-cercle de rayon 20 mm centré sur ledit centre dans la partie inférieure de la lentille et qui présentent un cylindre égal à la moitié de la dite différence (Smax - Smin).

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un graphe de sphère moyenne le long de la méridienne d'une lentille selon l'invention, d'addition une dioptrie et demie ;
- figure 2, une carte de sphère moyenne de la lentille de la figure 1 ;
- figure 3, une carte de cylindre de la lentille de la figure 1 ;
- figure 4, un graphe de sphère moyenne le long de la méridienne d'une lentille de l'art antérieur ;
- figure 5, une carte de sphère moyenne de la lentille de la figure 4 ;
- figure 6, une carte de cylindre de la lentille de la figure 4.

L'invention propose une lentille présentant à la fois un cylindre faible sur la surface de la lentille et une variation de puissance rapide au moins dans une zone centrale du verre - ce qui équivaut à une faible longueur de progression pour un verre progressif classique. Il faut comprendre que l'optimisation d'un verre progressif ou d'un verre multifocal est le résultat d'un compromis entre divers paramètres, et qu'il est d'autant plus facile de réaliser un verre "doux" - c'est-à-dire sans variations brutales de sphère et de cylindre - que la longueur de progression est importante. La lentille de l'invention peut être montée dans des montures de petite taille, et assure aussi un confort amélioré pour les porteurs utilisant de façon prolongée la zone de vision de près.

L'invention propose d'imposer sur la face asphérique de la lentille une contrainte sur le cylindre et la sphère maximale, qui s'exprime de la façon suivante :

$$L < 1/(-0,031*R^2 + 0,139*R + 0,014) \qquad (1)$$

Dans cette formule, la quantité L vaut :

$$L = (Smax - Smin)/gradSmax \qquad (2)$$

avec
Smax la valeur maximale de la sphère moyenne dans une zone d'un cercle de diamètre de 40 mm centré sur le centre géométrique de la lentille qui est limitée par des droites verticales à 1 mm de ce centre côté temporal et à 4 mm de ce centre côté nasal ;
Smin la valeur minimale de la sphère moyenne dans cette même zone et
gradSmax est la valeur maximale du gradient de la sphère moyenne dans cette même zone.

Le gradient dans ce cas est défini de façon classique comme le vecteur dont les coordonnées suivant chaque axe sont respectivement égales aux dérivées partielles de la sphère moyenne suivant cet axe, et par abus de langage, on appelle gradient la norme du vecteur gradient, soit :

$$gradS = \left\| \overrightarrow{gradS} \right\| = \sqrt{\left(\frac{\partial S}{\partial x}\right)^2 + \left(\frac{\partial S}{\partial y}\right)^2}$$

La quantité L est homogène à une longueur, et est représentative de la longueur de la lentille sur laquelle la sphère moyenne passe de la valeur minimale à la valeur maximale. Ainsi, si la sphère moyenne variait de façon linéaire sur la surface de la lentille, la quantité L serait exactement égale à la distance entre les points de sphère moyenne minimale et maximale.

Cette quantité est évaluée dans une zone du verre située autour de la verticale passant par le centre géométrique du verre; pour une lentille progressive, cette zone est la zone entourant la méridienne principale de progression; pour une lentille dédiée à la vision de près, cette zone est la zone d'intersection entre le regard du porteur et la surface du verre, lorsque le porteur regarde devant lui à différentes distances.

Dans la formule (1), la quantité R vaut :

$$R = Cmax/(Smax - Smin) \qquad (3)$$

avec Cmax la valeur maximale du cylindre à l'intérieur d'un cercle de diamètre de 40 mm centré sur le centre géométrique de la lentille.

La quantité R est en fait le cylindre maximal dans la partie utile de la lentille, normalisé par la différence maximale des sphères moyennes, autrement dit, normalisé par la variation de sphère sur la lentille. Dans le cas d'une lentille progressive, cette quantité est égale au cylindre maximal normalisé par l'addition; la définition de R qui est proposée selon l'invention s'applique non seulement aux lentilles progressives, mais aussi aux lentilles dédiées à la vision de près ; cette définition s'applique plus généralement à toute lentille présentant une variation de puissance.

La formule (1) propose une limitation à la valeur de L, en fonction de la valeur de R; qualitativement, cette formule propose en fait de limiter la longueur sur laquelle la sphère moyenne passe de la valeur minimale à la valeur maximale, en fonction du cylindre maximal. La relation est normalisée par rapport à la différence maximale de sphère moyenne, de sorte à s'appliquer pour les différentes variations possibles de sphère moyenne. Une autre façon d'interpréter la formule consiste à limiter le cylindre pour une valeur de L donnée, dans une proportion jamais égalée jusqu'ici.

Dans la suite de la présente description, on considère à titre d'exemple une lentille présentant une surface asphérique dirigée vers l'espace objet et une surface sphérique ou torique dirigée vers le porteur. On considère dans l'exemple une lentille destinée à l'oeil droit. La lentille pour l'oeil gauche peut être obtenue simplement par symétrie de cette lentille par rapport au plan vertical passant par le centre géométrique. On utilise un système de coordonnées orthonormé où l'axe des abscisses correspond à l'axe horizontal de la lentille et l'axe des ordonnées à l'axe vertical; le centre O du repère est le centre géométrique de la surface asphérique de la lentille. Dans la suite, les axes sont gradués en millimètres. On considère dans la suite à titre d'exemple une lentille d'addition une dioptrie et demie, et de base ou sphère au point de référence en vision de loin de 5 dioptries.

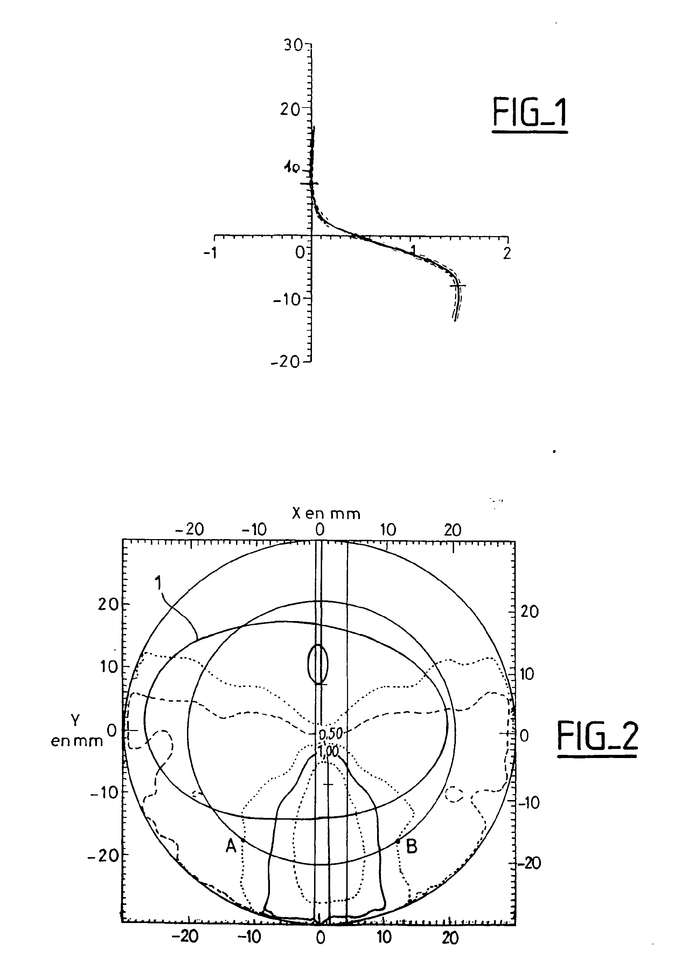

La figure 1 montre un graphe de sphère moyenne le long de la méridienne d'une lentille selon l'invention, d'addition une dioptrie et demie ; on a porté en abscisse des dioptries, et en ordonnées les ordonnées y sur le lentille, en mm. La méridienne de consigne est définie comme expliqué plus haut, comme la ligne d'intersection du regard d'un porteur moyen avec la surface asphérique de la lentille. On peut utiliser en pratique les définitions de la méridienne de consigne proposées dans les demandes de brevet précitées de la demanderesse, qui donne satisfaction. La méridienne obtenue après optimisation de la surface de la lentille, définie comme le lieu des milieux des segments horizontaux entre les lignes d'isocylindre de demi-addition, est sensiblement confondue avec cette méridienne de consigne.

Le point de contrôle pour la vision de loin est à une ordonnée y = 8 mm sur la surface, et présente une sphère de 5,00 dioptries, et un cylindre de 0,02 dioptries. Le point de contrôle pour la vision de près est situé à une ordonnée y = - 8 mm sur la surface, et présente une sphère de 6,50 dioptries, et un cylindre de 0,02 dioptries. Dans l'exemple, l'addition nominale de la lentille - une dioptrie et demie - est égale à l'addition calculée comme différence entre la sphère moyenne des points de contrôle. On a représenté sur la figure 1 en traits pleins la sphère moyenne, et en traits interrompus les courbures principales $1/R_1$ et $1/R_2$. Du fait de détourage de la lentille apparaissant sur les figures suivantes, la partie de la méridienne disponible sur la lentille est celle comprise dans l'intervalle [-13, 17] pour l'ordonnée y en mm. On constate sur la figure qu'il reste une zone de vision de près avec une sphère sensiblement constante, dans l'intervalle [-13, -7]; il reste aussi dans sur la méridienne une zone de vision de loin avec une sphère sensiblement constante, dans l'intervalle [7, 17]. Entre ces deux zones, la puissance le long de la méridienne varie de façon douce et sensiblement linéaire.

Pour cette lentille d'addition 1,50 dioptries, la valeur Smax - Smin vaut aussi 1,53 dioptries. Le gradient de sphère moyenne est maximal au point de coordonnées x= 0,5 et y = - 1,5 et atteint la valeur de 0,20 dioptries/mm. La quantité L vaut donc 7,64 mm.

Cette longueur est inférieure à celle que l'on trouve en appliquant la formule (2) aux lentilles progressives ou aux lentilles dédiées à la vision de près de l'état de la technique. A titre d'exemple, les lentilles progressives de la demanderesse décrites dans US-A-5 488 442 présentent une longueur de progression de l'ordre de 12,5 mm et la quantité L pour ces lentilles vaut 11,79 mm.

La figure 2 montre une carte de sphère moyenne de la lentille de la figure 1; on y a porté en outre la ligne 1 d'usinage de la lentille pour permettre un montage dans une monture de petite taille; généralement, en Europe, les montures sont considérées comme des montures de petite taille lorsque la hauteur de la monture (cote Boxing B, norme ISO8624 sur les systèmes de mesure des montures de lunettes) est inférieure à 35 mm. Aux Etats-Unis, on considère qu'une monture est de petite taille pour une cote Boxing B inférieure à 40 mm; il s'agit là de valeurs moyennes. Dans l'exemple, la hauteur de la monture est égale à 31 mm et la largeur (cote boxing A) est égale à 46 mm, ce qui correspond à une monture enfant de 7 ans. La carte de la figure 2 montre la projection de la surface asphérique d'une lentille dans le plan (x, y) ; on y reconnaît le repère (x, y) défini plus haut, ainsi que la méridienne principale de progression. Les points de référence pour la vision de loin et pour la vision de près présentent des coordonnées respectives de (0 ; 8) et (1,2 ; -8). L'abscisse du point de contrôle pour la vision de près peut varier en fonction de l'addition, comme décrit dans FR-A-2 683 642 et FR-A-2 683 643

Dans l'exemple de la figure, la méridienne principale de progression présente globalement trois parties. Dans la première partie, la méridienne principale de progression présente un segment vertical, confondu avec l'axe des ordonnées. Ce segment se termine, à sa partie inférieure, sensiblement à la croix de montage. De préférence, la différence entre la sphère à la croix de montage et la sphère au point de référence de vision de loin est inférieure ou égale à 0,25 dioptrie, voire à 0,15 dioptrie.

La deuxième partie de la méridienne débute sensiblement à la croix de montage. Elle est inclinée du côté nasal de la lentille, sensiblement jusqu'au point où la différence de sphère moyenne par rapport au point de vision de loin atteint 85 % de l'addition.

La troisième partie de la méridienne s'étend depuis ce point, sensiblement verticalement vers le bas. Elle correspond à la zone de vision de près.

Apparaissent sur la figure 2 les lignes d'isosphère, c'est-à-dire les lignes formées des points présentant la même valeur de sphère moyenne. On a porté les lignes pour des valeurs de sphère moyenne avec un pas de 0,25 dioptries, la sphère moyenne étant calculée par rapport à la sphère moyenne du point de référence pour la vision de loin. La figure montre la ligne d'isosphère 0 dioptrie, qui est en trait plein et passe par le point de référence pour la vision de loin; elle montre aussi les lignes d'isosphère 0,25 dioptrie, 0,50 dioptrie, 0,75 dioptrie, 1,00 dioptrie, 1,25 dioptrie et 1,50 dioptrie.

On a aussi porté sur la figure 2 les droites verticales situées de part et d'autres du centre géométrique de la lentille, à 1 mm du centre côté temporal et à 4 mm du centre côté nasal. Dans l'exemple, la lentille est une lentille droite : la surface multifocale est la surface extérieure de la lentille, et la méridienne principale est dirigée vers le côté droit. Le côté nasal se trouve sur la droite de la figure, et le côté temporal sur la gauche de la figure. Ces deux droites définissent dans le cercle de diamètre 40 mm centré sur le centre géométrique de la lentille une zone qui comprend la méridienne principale de progression. Le cercle de diamètre 40 mm correspond à la zone de la lentille qui est généralement la plus utilisée par un porteur. Comme expliqué plus haut, la quantité L est évaluée dans cette zone.

Sont encore portés à la figure 2 les points d'intersection A et B entre le cercle de diamètre 40 mm centré sur le centre géométrique de la lentille et la ligne d'isosphère (Smax - Smin)/2 qui correspond à 0,75 dioptrie. Ces points sont situés de part et d'autre de la zone de vision de près. En chacun de ces points, il est avantageux que le rapport gradS/(Smax - Smin) entre le gradient de la sphère et la différence de sphère maximale et de sphère minimale dans la zone entourant la méridienne soit compris entre 0,015 et 0,07 mm$^{-1}$. En d'autres termes, le gradient de la sphère en ces points, normalisé par la quantité Smax - Smin est compris entre ces bornes. Cette contrainte limite les variations de la sphère dans le bas de la zone de vision de près, et évite que la faible longueur de variation de la sphère selon l'invention ne conduise à des variations importantes de la sphère dans la partie inférieure de la zone de vision de près. Dans l'exemple, au point A la pente de sphère vaut 0,028 dioptrie/mm, et le rapport à l'addition vaut donc 0,018 mm$^{-1}$. Pour le point B, la pente de sphère vaut 0,035 dioptrie/mm, et le rapport à l'addition vaut 0,023 mm$^{-1}$.

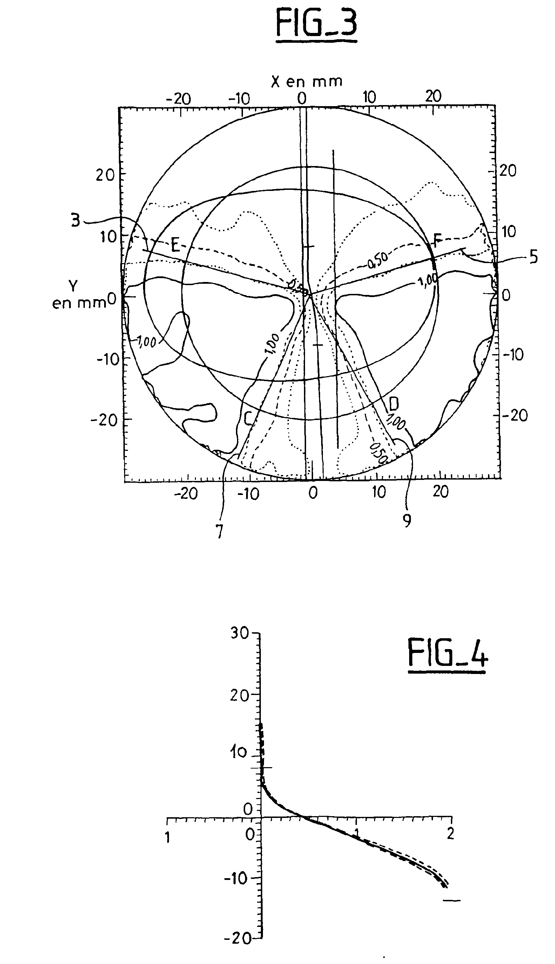

La figure 3 montre une carte de cylindre d'une lentille selon l'invention; on utilise les mêmes conventions graphiques et les mêmes notations qu'à la figure 2, en portant sur la figure non pas la sphère, mais le cylindre. Du point de vue des lignes d'isocylindre, la figure 3 montre que les lignes sont bien espacées dans la zone de vision de loin, se resserrent dans la zone de vision intermédiaire, et sont de nouveau bien espacées, même à l'intérieur d'une monture de petite taille. Le cylindre maximal est atteint dans le cercle de diamètre 40 mm en un point de coordonnées x = - 4,5 et y = - 2,5, et il vaut en ce point 1,20 dioptries. La quantité R pour cette lentille vaut donc 0,79.

Dans ce cas,

$$1/(-0,031*R^2 + 0,139*R + 0,014) = 9,57$$

et la relation 1 est bien satisfaite.

Dans l'exemple, pour cette valeur de L de 7,64 mm, la zone de vision de près, qui commence sensiblement à la hauteur à laquelle 85% de l'addition ou du rapport Smax - Smin est atteinte, se trouve à peu près 5 mm sous le centre géométrique de la lentille. Cette position correspond à la position de la pastille de vision de près dans les lentilles bifocales de l'état de la technique; on assure ainsi, comme expliqué plus haut, une adaptation facile des porteurs de lentilles bifocales aux lentilles progressives selon l'invention. De fait, aucun changement de posture n'est nécessaire pour passer des verres bifocaux à une lentille de l'invention.

On a encore porté sur la figure 3 les points d'intersection du cercle de diamètre 40 mm centré sur le centre géométrique de la lentille et des lignes d'isocylindre (Smax - Smin)/2, soit 0,75 dioptries; la valeur de 0,75 dioptries correspond sensiblement à la moitié de la quantité Smax - Smin, en d'autres termes à la moitié de l'addition de la lentille progressive. Ces points d'intersection sont au nombre de quatre, à savoir deux points E et F dans la partie supérieure de la lentille et deux points C et D dans la partie inférieure de la lentille.

La zone délimitée par les demi-droites 3 et 5 issues du centre géométrique de la lentille, et passant par les points E et F dans la partie supérieure de la lentille correspond sensiblement à la zone de vision de loin de la lentille. L'invention propose que l'angle entre ces demi-droites soit compris entre 130° et 155°. Ces valeurs assurent une bonne largeur de la zone de vision de loin et un confort de la lentille en vision de loin. Pour une lentille dédiée à la zone de vision de près, cette contrainte assure aussi une vision dégagée dans la partie supérieure de la lentille - qui n'est pas à proprement parler une zone de vision de loin. Dans l'exemple, comme le montre la figure, l'angle est voisin de 149°.

De façon similaire, la zone délimitée par les demi-droites 7 et 9 issues du centre géométrique de la lentille, et passant par les points C et D dans la partie inférieure de la lentille correspond sensiblement à la zone de vision de près de la lentille. L'invention propose que l'angle entre ces demi-droites soit compris entre 40° et 55°. Ces valeurs assurent une bonne largeur de la zone de vision de près et un confort de la lentille en vision de près. Cette contrainte s'applique tant aux lentilles progressives, comme celles de l'exemple, qu'aux lentilles dédiées à la zone de vision de près. Dans l'exemple, comme le montre la figure, l'angle est voisin de 52°.

Pour les points C, D, E et F, l'invention propose en outre une limite sur le gradient de cylindre. Le gradient de cylindre est défini de la même façon que le gradient de sphère moyenne. La limite proposée est comme pour le gradient de sphère normalisée par la quantité Smax - Smin, de sorte à s'appliquer indifféremment pour toutes les différences de sphère moyenne. L'invention propose donc que la quantité gradC/(Smax - Smin) pour les points E et F dans la partie supérieure de la lentille soit comprise entre 0,03 et 0,11 mm$^{-1}$. L'invention propose aussi que la quantité gradC/(Smax - Smin) soit pour les points C et D dans la partie inférieure de la lentille comprise entre 0,05 et 0,14 mm$^{-1}$.

Pour la zone de vision de loin comme pour la zone de vision de près, ces limites sur le gradient de cylindre évitent les variations importantes du cylindre sur les bords des zones de vision, et renforcent la douceur de la lentille. Elle est plus relâchée dans la partie supérieure de la lentille que dans la partie inférieure de la lentille, dans la mesure où les points E et F dans la partie supérieure de la lentille sont plus écartés que les points C et D dans la partie inférieure de la lentille. Dans l'exemple, aux points C et D, le gradient de cylindre vaut respectivement 0,097 et 0,165 dioptrie/mm. Le rapport pour ces points vaut respectivement 0,064 et 0,108 mm$^{-1}$. Le gradient de cylindre vaut 0,095 dioptrie/mm au point E, et 0,099 dioptrie/mm au point F. Le rapport à l'addition vaut respectivement 0,062 ou 0,065 mm$^{-1}$.

L'invention propose encore que la pente de cylindre aux points C et D, dans la partie inférieure de la lentille, soit inférieure au double de la pente de cylindre au point E d'une part, et au point F d'autre part. Cette condition limite les variations du cylindre dans la partie inférieure de la lentille, dans laquelle les lignes d'isocylindre sont plus resserrées.

Les figures 2 et 3, outre les éléments déjà décrits, montrent en traits gras la limite d'une monture dite de petite taille; typiquement, on appelle monture de petite taille une monture dont la cote B dans le système Boxing est inférieure à 35 ou 40 mm.

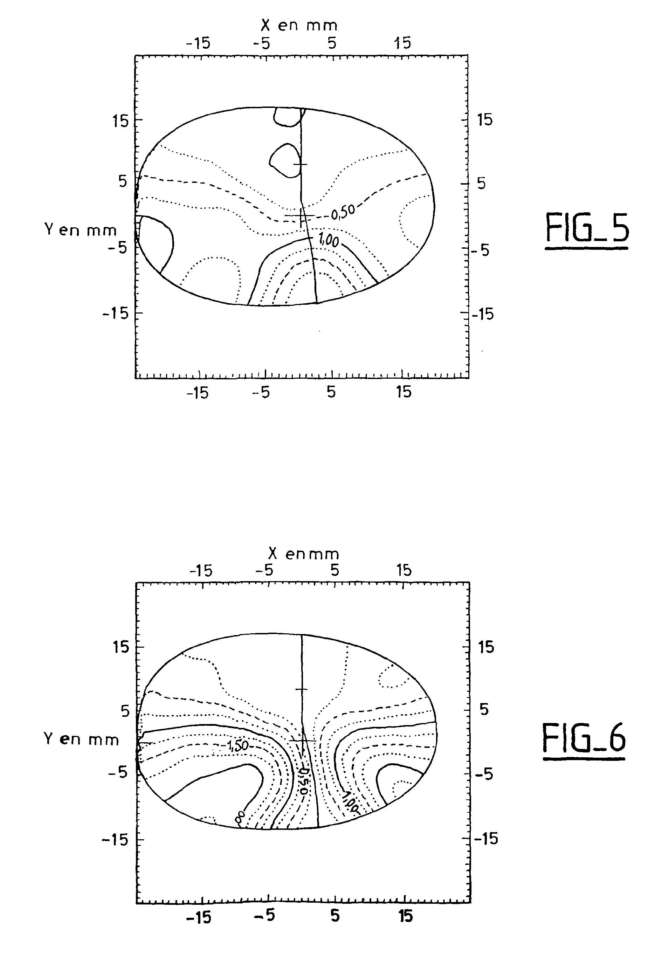

Les figures 4, 5 et 6 montrent respectivement un graphe de sphère moyenne le long de la méridienne, une carte de sphère moyenne et une carte de cylindre d'une lentille de l'état de la technique, d'addition 2; on y a porté, pour les besoins de la comparaison, la limite de la monture déjà représentée sur les figures 2 et 3. La simple comparaison de la figure 4 à la figure 1, de la figure 5 à la figure 2, ou de la figure 6 à la figure 3 met en évidence les problèmes de l'art antérieur pour les montures de petite taille, et la solution de l'invention.

Sur la figure 4, on constate qu'il n'existe plus dans la lentille de zone de vision de près, dans laquelle la puissance le long de la méridienne soit sensiblement constante. Au contraire, la méridienne est nettement tronquée, et la partie de puissance sensiblement constante est dans la partie de la lentille qui a été détourée. Sur la figure 6, on constate que la zone de vision intermédiaire de la lentille de l'art antérieur est au voisinage du bord inférieur de la lentille détourée. La zone de vision de près est largement entamée.

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de consigne de lentilles progressives s'obtient par optimisation numérique à l'aide d'un calculateur, en fixant des conditions aux limites pour un certain nombre de paramètres de la lentille.

On peut utiliser comme conditions aux limites un ou plusieurs des critères définis plus haut, et notamment les critères de la revendication 1.

Les exemples de l'invention donnés plus haut portent sur une lentille progressive; l'invention s'applique aussi à une lentille dédiée à la vision de près. Pour une telle lentille, l'optimisation peut s'effectuer sans contraintes sur la vision de loin.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention. Avantageusement, la méridienne principale de progression est sensiblement confondue avec la ligne formée des milieux des segments horizontaux dont les extrémités ont une valeur de cylindre de 0,5 dioptrie. La lentille est ainsi symétrique horizontalement en termes de cylindre, par rapport à la méridienne. La vision latérale est favorisée.

Bien entendu, la présente invention n'est pas limitée à la présente description: entre autres, la surface asphérique pourrait être la surface dirigée vers le porteur des lentilles. Par ailleurs, on n'a pas insisté dans la description sur l'existence de lentilles qui peuvent être différentes pour les deux yeux. Enfin, si la description donne un exemple de lentille d'addition d'une dioptrie et demie et de base cinq dioptries, l'invention s'applique aussi à des lentilles, quelle que soit la prescription du porteur. Plus généralement l'invention peut être appliquée à toute lentille présentant une variation de puissance.

**Revendications**

**1.** Une lentille ophtalmique multifocale progressive comportant une surface asphérique progressive avec en tout point une sphère moyenne et un cylindre, **caractérisée par** la relation :

$$L < 1/(-0{,}031*R^2 + 0{,}139*R + 0{,}014)$$

où L est égal au rapport (Smax- Smin)/gradSmax entre la différence des valeurs maximale et minimale de la sphère moyenne dans une zone d'un cercle de diamètre de 40 mm centré sur le centre géométrique de la lentille, cette zone étant limitée par des droites verticales à 1 mm de ce centre côté temporal et à 4 mm de ce centre côté nasal d'une part, et la valeur maximale du gradient de la sphère moyenne dans cette même zone d'autre part, et où R est égal au rapport Cmax/(Smax - Smin) entre la valeur maximale du cylindre à l'intérieur du dit cercle et la différence des valeurs maximale et minimale de la sphère moyenne dans ladite zone.

**2.** Lentille ophtalmique selon la revendication 1, **caractérisée en ce qu'**elle présente une zone de vision de près.

**3.** Lentille ophtalmique selon la revendication 1 ou 2, **caractérisée en ce qu'**elle présente une zone de vision de loin.

**4.** La lentille de la revendication 1, 2 ou 3, **caractérisée en ce que** l'angle entre deux demi-droites (3, 5) issues du centre géométrique de la lentille et passant respectivement par les points d'un cercle de rayon 20 mm centré sur le centre géométrique qui présentent un cylindre égal à la moitié de la différence (Smax - Smin) des valeurs maximale et minimale de la sphère moyenne dans ladite zone et qui sont situés dans la moitié supérieure de la lentille est compris entre 130° et 155°.

**5.** La lentille de l'une des revendications 1 à 4, **caractérisée en ce que** l'angle entre deux demi-droites (7, 9) issues du centre géométrique de la lentille et passant respectivement par les points d'un cercle de rayon 20 mm centré sur le centre géométrique qui présentent un cylindre égal à la moitié de la différence (Smax - Smin) des valeurs maximale et minimale de la sphère moyenne dans ladite zone et qui sont situés dans la moitié inférieure de la lentille est compris entre 40° et 55°.

**6.** La lentille de l'une des revendications précédentes, **caractérisée en ce qu'**en un point situé sur un demi-cercle de rayon 20 mm centré sur le centre géométrique dans la partie supérieure de la lentille, et qui présente un cylindre égal à la moitié de la différence (Smax - Smin) des valeurs maximale et minimale de la sphère moyenne dans ladite zone, le rapport entre le gradient de cylindre et la dite différence est compris entre 0,03 et 0,11 mm$^{-1}$.

**7.** La lentille de l'une des revendications précédentes, **caractérisée en ce qu'**en un point situé sur un demi-cercle de rayon 20 mm centré sur le centre géométrique dans la partie inférieure de la lentille, et qui présente un cylindre égal à la moitié de la différence (Smax - Smin) des valeurs maximale et minimale de la sphère moyenne dans ladite zone, le rapport entre le gradient de cylindre et la dite différence est compris entre 0,05 et 0,14 mm$^{-1}$.

**8.** La lentille de l'une des revendications précédentes, **caractérisée en ce que** le rapport entre

- le maximum du gradient de cylindre sur les deux points situés sur un demi-cercle de rayon 20 mm centré sur le centre géométrique dans la partie inférieure de la lentille, et qui présentent un cylindre égal à la moitié de la différence (Smax - Smin) des valeurs maximale et minimale de la sphère moyenne dans ladite zone d'une part et
- le minimum du gradient de cylindre sur les deux points situés sur un demi-cercle de rayon 20 mm centré sur le centre géométrique dans la partie supérieure de la lentille, et qui présentent un cylindre égal à la moitié de la différence (Smax - Smin) des valeurs maximale et minimale de la sphère moyenne dans ladite zone, d'autre part est inférieur à 2.

**9.** La lentille de l'une des revendications précédentes, **caractérisée en ce que**, pour un point situé sur un cercle de rayon 20 mm centré sur le centre géométrique, et dont la sphère moyenne est supérieure à la sphère moyenne minimale Smin d'une quantité égale à la moitié de la différence (Smax - Smin) des valeurs maximale et minimale de la sphère moyenne dans ladite zone, le rapport entre le gradient de sphère et la dite différence est compris entre 0,015 et 0,07 mm$^{-1}$.

**10.** La lentille de l'une des revendications précédentes, **caractérisée en ce que** l'angle sous lequel sont vus depuis le centre géométrique de la lentille deux points situés sur un demi-cercle de rayon 20 mm centré sur ledit centre dans la partie supérieure de la lentille et qui présentent un cylindre égal à la moitié de la différence (Smax - Smin) des valeurs maximale et minimale de la sphère moyenne dans ladite zone est au moins égal à deux fois l'angle sous lequel sont vus depuis le centre géométrique de la lentille deux points situés sur un demi-cercle de rayon 20 mm centré sur ledit centre dans la partie inférieure de la lentille et qui présentent un cylindre égal à la moitié de la dite différence (Smax - Smin).

**Claims**

**1.** A progressive multifocal ophthalmic lens, comprising a progressive aspherical surface with a mean sphere and a cylinder at every point thereof, **characterized by** the equation:

$$L < 1/(-0.031 \times R^2 + 0.139 \times R + 0.014)$$

where L is equal to the ratio $(S_{max}-S_{min})/gradS_{max}$, the ratio of the difference between the maximum and minimum values of the mean sphere in a region of a 40 mm diameter circle centered on the geometric center of the lens, this region being limited by vertical straight lines at 1 mm from this center on the temporal side and at 4 mm from this center on the nasal side, on the one hand, to the maximum value of the gradient of the mean sphere in this same region, on the other hand, and
where R is equal to the ratio $C_{max}/(S_{max}-S_{min})$, the ratio of the maximum cylinder value inside said circle to the difference between the maximum and minimum values of the mean sphere in said region.

2. The ophthalmic lens as claimed in claim 1, **characterized in that** it has a near vision region.

3. The ophthalmic lens as claimed in claim 1 or 2, **characterized in that** it has a far vision region.

4. The lens as claimed in claim 1, 2 or 3, **characterized in that** the angle between two half-lines (3, 5) coming from the geometric center of the lens and passing respectively through the points of a 20 mm radius circle centered on the geometric center which have a cylinder equal to half the difference $(S_{max}-S_{min})$ between the maximum and minimum values of the mean sphere in said region and which are located in the upper half of the lens is between 130° and 155°.

5. The lens of one of claims 1 to 4, **characterized in that** the angle between two half-lines (7, 9) coming from the geometric center of the lens and passing respectively through the points of a 20 mm radius circle centered on the geometric center which have a cylinder equal to half the difference $(S_{max}-S_{min})$ between the maximum and minimum values of the mean sphere in said region and which are located in the lower half of the lens is between 40° and 55°.

6. The lens of one of the preceding claims, **characterized in that** at a point located on a half-circle of 20 mm radius centered on the geometric center in the upper part of the lens, and which has a cylinder equal to half the difference $(S_{max}-S_{min})$ between the maximum and minimum values of the mean sphere in said region, the ratio of the cylinder gradient to said difference is between 0.03 and 0.11 $mm^{-1}$.

7. The lens of one of the preceding claims, **characterized in that** at a point located on a half-circle of 20 mm radius centered on the geometric center in the lower part of the lens, and which has a cylinder equal to half the difference $(S_{max}-S_{min})$ between the maximum and minimum values of the mean sphere in said region, the ratio of the cylinder gradient to said difference is between 0.05 and 0.014 $mm^{-1}$.

8. The lens of one of the preceding claims, **characterized in that** the ratio of

   - the maximum cylinder gradient on the two points located on a half-circle of 20 mm radius centered on the geometric center in the lower part of the lens, and which have a cylinder equal to half the difference $(S_{max}-S_{min})$ between the maximum and minimum values of the mean sphere in said region, on the one hand, to
   - the minimum cylinder gradient on the two points located on a half-circle of 20 mm radius centered on the geometric center in the upper part of the lens, and which have a cylinder equal to half the difference $(S_{max}-S_{min})$ between the maximum and minimum values of the mean sphere in said region, on the other hand, is less than 2.

9. The lens of one of the preceding claims, **characterized in that**, for a point located on a 20 mm radius circle centered on the geometric center, and whose mean sphere is greater than the minimum mean sphere $S_{min}$ by an amount equal to half the difference $(S_{max}-S_{min})$ between the maximum and minimum values of the mean sphere in said region, the ratio of the sphere gradient to said difference is between 0.015 and 0.07 $mm^{-1}$.

10. The lens of one of the preceding claims, **characterized in that** the angle from which two points located on a half-circle of 20 mm radius centered on the geometric center of the lens in the upper part of the lens and which have a cylinder equal to half the difference $(S_{max}-S_{min})$ between the maximum and minimum values of the mean sphere in said region are seen from said center is at least equal to twice the angle from which two points located on a half-circle of 20 mm radius centered on the geometric center of the lens in the lower part of the lens and which have a cylinder equal to half said difference ($S_{max}$-$S_{min}$) are seen from said center.

## Patentansprüche

1. Multifokale progressive ophthalmische Linse, aufweisend eine progressiv aspherische Fläche mit an jedem Punkt einer mittleren Flächenbrechkraft und einem Astigmatismus, **gekennzeichnet durch** die Relation:

$$L<1/(-0,031 * R^2 + 0,139 * R + 0,014)$$

wobei L gleich dem Quotienten (Smax-Smin)/gradSmax aus einerseits der Differenz des Maximalwertes und des Minimalwertes der mittleren Flächenbrechkraft in einem Bereich eines Kreises mit 40 mm Durchmesser und zentriert im geometrischen Zentrum der Linse, wobei der Bereich begrenzt ist einerseits von vertikalen Geraden bei 1 mm temporal von dem Zentrum und bei 4 mm nasal von dem Zentrum begrenzt ist, und andererseits dem Maximalwert des Gradienten der mittleren Flächenbrechkraft in diesem Bereich, und
wobei R gleich dem Quotienten Cmax/(Smax-Smin) aus dem Maximalwert des Astigmatismus im Inneren des Kreises und der Differenz der Maximal- und des Minimalwerte der mittleren Flächebrechkraft in dem Bereich ist.

2. Ophthalmische Linse gemäß Anspruch 1, **dadurch gekennzeichnet, dass** sie einen Nahsichtbereich aufweist.

3. Ophthalmische Linse gemäß Anspruch 1 oder 2, **dadurch gekennzeichnet, dass** sie einen Fernsichtbereich aufweist.

4. Linse gemäß Anspruch 1, 2 oder 3, **dadurch gekennzeichnet, dass** der Winkel zwischen zwei Halbgeraden (3, 5), ausgehend vom geometrischen Zentrum der Linse und jeweils durch die Punkte eines Kreises mit Radius 20 mm, zentriert im geometrischen Zentrum der Linse, tretend, welche einen Astigmatismus gleich der Hälfte der Differenz (Smax - Smin) der Maximal- und Minimalwerte der mittleren Flächenbrechkraft in dem Bereich aufweisen und welche in der oberen Hälfte der Linse angeordnet sind, zwischen 130° und 155° ist.

5. Linse gemäß einem der Ansprüche 1 bis 4, **dadurch gekennzeichnet, dass** der Winkel zwischen zwei Halbgeraden (7, 9), ausgehend vom geometrischen Zentrum der Linse und jeweils durch die Punkte eines Kreises mit Radius 20 mm, zentriert im geometrischen Zentrum der Linse tretend, welche einen Astigmatismus gleich der Hälfte der Differenz (Smax - Smin) der Maximal- und Minimalwerte der mittleren Flächenbrechkraft in dem Bereich aufweisen und welche in der unteren Hälfte der Linse angeordnet sind, zwischen 40° und 55° ist.

6. Linse gemäß einem der vorangehenden Ansprüche, **dadurch gekennzeichnet, dass** an einem Punkt auf einem Halbkreis mit Radius 20 mm, zentriert im geometrischen Zentrum, im oberen Abschnitt der Linse, und der einen Astigmatismus gleich der Hälfte der Differenz (Smax - Smin) der Maximal- und Minimalwerte der mittleren Flächenbrechkraft in dem Bereich aufweist, der Quotient aus dem Gradient des Astigmatismus und der Differenz zwischen 0,03 und 0,11 mm$^{-1}$ ist.

7. Linse gemäß einem der vorangehenden Ansprüche, **dadurch gekennzeichnet, dass** an einem Punkt auf einem Halbkreis mit Radius 20 mm, zentriert im geometrischen Zentrum, im unteren Abschnitt der Linse und der einen Astigmatismus gleich der Hälfte der Differenz (Smax - Smin) der Maximal- und Minimalwerte der mittleren Flächenbrechkraft in dem Bereich aufweist, der Quotient aus dem Gradient des Astigmatismus und der Differenz zwischen 0,05 und 0,14 mm$^{-1}$ ist.

8. Linse gemäß einem der vorangehenden Ansprüche, **dadurch gekennzeichnet, dass** der Quotient aus

- dem Maximum des Gradienten des Astigmatismus an den zwei Punkten auf einem Halbkreis von 20 mm Radius, zentriert im geometrischen Zentrum , im unteren Abschnitt der Linse, und die einen Astigmatismus gleich der Hälfte der Differenz (Smax - Smin) der Maximal- und der Minimalwerte der mittleren Flächenbrechkraft in dem Bereich aufweisen, einerseits und
- dem Minimum des Gradienten des Astigmatismus an den zwei Punkten auf einem Halbkreis von 20 mm Radius, zentriert im geometrischen Zentrum , im oberen Abschnitt der Linse, und die einen Astigmatismus gleich der Hälfte der Differenz (Smax - Smin) der Maximal- und Minimalwerte der mittleren Flächenbrechkraft in dem Bereich aufweisen, andererseits,

kleiner als 2 ist.

9. Linse gemäß einem der vorangehenden Ansprüche, **dadurch gekennzeichnet, dass** für einen Punkt auf einem Kreis mit Radius 20 mm, zentriert im geometrischen Zentrum, und bei dem die mittlere Flächenbrechkraft größer als die minimale mittlere Flächenbrechkraft Smin von einer Quantität gleich der Hälfte der Differenz (Smax - Smin) der Maximal- und Minimalwerte der mittleren Flächenbrechkraft in dem Bereich ist, der Quotient aus dem Gradient der Flächenbrechkraft und der Differenz zwischen 0,015 und 0,07 mm$^{-1}$ ist.

10. Linse gemäß einem der vorangehenden Ansprüche, **dadurch gekennzeichnet, dass** der Winkel, unter dem vom geometrischen Zentrum der Linse aus zwei Punkte aufscheinen, welche auf einem Halbkreis von 20 mm Radius, zentriert im Zentrum, im oberen Abschnitt der Linse befindlich sind, und welche einen Astigmatismus gleich der Hälfte der Differenz (Smax - Smin) der Maximal- und Minimalwerte der mittleren Flächenbrechkraft in dem Bereich aufweisen, zumindest gleich zweimal dem Winkel ist, unter dem vom geometrischen Zentrum der Linse aus zwei Punkte aufscheinen, welche auf einem Halbkreis von 20 mm Radius, zentriert im Zentrum, im unteren Abschnitt der Linse befindlich sind und welche einen Astigmatismus gleich der Hälfte der Differenz (Smax - Smin) aufweisen.

FIG_1

FIG_2

X en mm

Y en mm

## FIG_3

## FIG_4

FIG_5

FIG_6